# EUROPÄISCHE PATENTANMELDUNG

(11) **EP 2 985 888 A1**
(43) Veröffentlichungstag der Anmeldung: **17.02.2016**
(21) Anmeldenummer: 14181040.8
(22) Anmeldetag: 14.08.2014
(51) Int. Cl.: H02K 3/50

(54) **Elektrische Maschine mit einem Schwingungsdämpfer**

(71) Anmelder: Siemens Aktiengesellschaft, 80333 München (DE)
(72) Erfinder: Bentele, Stefan, 45473 Mülheim an der Ruhr (DE); Gebauer, Thomas, 47443 Moers (DE); Grau Sorarrain, Esteban, 40215 Düsseldorf (DE); Hiß, Florian, 45468 Mülheim an der Ruhr (DE); Schittenhelm, Rudolf Sebastian, 45130 Essen (DE); Schlüter, Dennis, 46569 Hünxe (DE); Steins, Hendrik, 45134 Essen (DE); Zhang, Ya, 47058 Duisburg (DE)

(57) **Zusammenfassung**

Die Erfindung betrifft eine elektrische Maschine mit einem Blechpaket (2), einem elektrischen Leiter (5), der in Aussparungen (4) des Blechpakets (2) eingebracht ist und an der Stirnseite (3) des Blechpakets (2) aus dem Blechpaket (2) herausgeführt ist, wodurch der elektrische Leiter (2) außerhalb des Blechpakets (2) einen Wickelkopf (6) bildet, und mindestens einem eine Flüssigkeit aufweisenden hydraulischen Schwingungsdämpfer (9), der den Wickelkopf (6) an dem Blechpaket (2) abstützt, so dass Schwingungen des Wickelkopfes (6) im Betrieb der elektrischen Maschine (1) dämpfbar sind.

## Beschreibung

Die Erfindung betrifft eine elektrische Maschine mit einem Schwingungsdämpfer.

Eine elektrische Maschine, wie zum Beispiel ein Turbogenerator, weist eine Wicklung von elektrischen Leitern auf. Die elektrischen Leiter sind von einer Isolation umhüllt, um die elektrischen Leiter gegen die Umgebung, gegen ein Blechpaket der elektrischen Maschine und/oder gegen benachbarte Windungen der Wicklung elektrisch zu isolieren. Im Betrieb der elektrischen Maschine werden aufgrund des rotierenden Magnetfeldes zeitlich sich verändernde Kräfte auf die elektrischen Leiter ausgeübt. Insbesondere die Wickelköpfe der Wicklung können dabei zu einer Schwingung angeregt werden.

Die Schwingung führt dabei im Bereich der Wickelköpfe zu einer mechanischen Belastung der elektrischen Leiter und der sie umhüllenden Isolation. Die mechanische Belastung kann beispielsweise zu der Bildung von Rissen in der Isolation führen. Im Betrieb der elektrischen Maschine kann es dann zu der Bildung von elektrischen Teilentladungen in den Rissen kommen. Die elektrischen Teilentladungen führen dazu, dass die Isolation weiter zersetzt wird, was dazu führen kann, dass sich die Risse weiter ausbreiten können und es zu einem elektrischen Durchschlag durch die Isolation kommen kann. Somit führt die Schwingung der Wickelköpfe zu einer Verkürzung der Lebensdauer der Wickelköpfe.

Aufgabe der Erfindung ist es, eine elektrische Maschine zu schaffen, bei der die Schwingungsbelastung der Wickelköpfe im Betrieb der elektrischen Maschine gering ist und dadurch die Lebensdauer der Wickelköpfe lang ist.

Die erfindungsgemäße elektrische Maschine weist ein Blechpaket, einen elektrischen Leiter, der in Aussparungen des Blechpakets eingebracht ist und an der Stirnseite des Blechpakets aus dem Blechpaket herausgeführt ist, wodurch der elektrische Leiter außerhalb des Blechpakets einen Wickelkopf bildet, und mindestens einen eine Flüssigkeit aufweisenden hydraulischen Schwingungsdämpfer auf, der den Wickelkopf an dem Blechpaket abstützt, so dass Schwingungen des Wickelkopfs im Betrieb der elektrischen Maschine dämpfbar sind. Mit der erfindungsgemäßen elektrischen Maschine können im Betrieb der elektrischen Maschine auftretende Schwingungen des Wickelkopfes gedämpft werden, indem die Schwingungsenergie des Wickelkopfes mittels des hydraulischen Schwingungsdämpfers in Wärmeenergie umgewandelt wird. Dadurch ist die Schwingungsbelastung des Wickelkopfes gering, wodurch die Lebensdauer der elektrischen Maschine lang ist.

Es ist bevorzugt, dass die Flüssigkeit eine magnetorheologische Flüssigkeit ist. Die magnetorheologische Flüssigkeit zeichnet sich dadurch aus, dass ihre Viskosität umso größer ist, je stärker ein an ihr anliegendes Magnetfeld ist. Weil die Dämpfungswirkung des hydraulischen Schwingungsdämpfers von dessen Viskosität abhängt, ist somit auch die Dämpfungswirkung umso größer, je größer das an die magnetorheologische Flüssigkeit anliegende Magnetfeld ist. Die auf die elektrischen Leiter des Wickelkopfes wirkende Kraft ist ebenfalls umso größer, je größer das an dem Leiter anliegende Magnetfeld ist. Indem nun die Dämpfungswirkung des Schwingungsdämpfers umso größer ist, je größer die auf den Wickelkopf wirkende Kraft ist, ergibt sich dadurch eine besonders gute Dämpfung der Schwingung des Wickelkopfs. Durch diese besonders gute Dämpfung ist die Schwingungsbelastung des Wickelkopfes gering und seine Lebensdauer lang.

Die magnetorheologische Flüssigkeit weist bevorzugt eine Suspension mit magnetisch polarisierbaren Partikeln und einer Trägerflüssigkeit auf. Bei einem Anlegen eines Magnetfeldes werden die Partikel polarisiert und bilden in der Trägerflüssigkeit Ketten aus, die in Richtung der Feldlinien des Magnetfeldes orientiert sind. Durch die Bildung der Ketten steigt die Viskosität der magnetorheologischen Flüssigkeit an. Bei einer Abschwächung des Magnetfeldes zerfallen diese Ketten wieder und die Viskosität sinkt ab. Dieser Prozess ist vorteilhaft derart schnell, dass er der Änderung des Magnetfeldes in der elektrischen Maschine folgen kann.

Es ist bevorzugt, dass die elektrische Maschine einen Stützring aufweist, mittels dem der Wickelkopf an dem Schwingungsdämpfer abgestützt ist. Mittels des Stützrings kann vorteilhaft die von dem Wickelkopf in Richtung des Schwingungsdämpfers ausgeübte Kraft auf eine größere Fläche verteilt werden, als dies ohne den Stützring möglich wäre. Damit ist die mechanische Belastung des Wickelkopfes bei seiner Schwingung gering. In dem Fall, dass die elektrischen Leiter im Bereich des Wickelkopfes von einer Isolation umhüllt sind, ist auch die mechanische Belastung der Isolation gering. Der Stützring umschließt bevorzugt den Wickelkopf in Radialrichtung der elektrischen Maschine außen. Dadurch kann vorteilhaft eine Versteifung des Wickelkopfes erreicht werden, wodurch eine Verschiebung seiner Resonanzfrequenz zu höheren Frequenzen erreicht wird, wobei die höheren Frequenzen weniger leicht durch das rotierende Magnetfeld anregbar sind.

Es ist bevorzugt, dass die elektrische Maschine mindestens eine an dem Blechpaket angebrachte Stützkonsole aufweist, mittels der der Schwingungsdämpfer an dem Blechpaket abgestützt ist. Dadurch wird erreicht, dass der Schwingungsdämpfer in einem beliebigen axialen Abstand von der Stirnseite des Blechpakets angebracht werden kann. Die Schwingungsamplituden des Wickelkopfes sind umso größer, je größer der axiale Abstand von der Stirnseite ist. Die Schwingungen lassen sich umso effektiver dämpfen, je größer die auf den Schwingungsdämpfer übertragene Schwingungsamplitude ist. Es ist bevorzugt, dass der Schwingungsdämpfer einen in der Flüssigkeit bewegbaren Kolben aufweist, dessen Bewegungsrichtung in Radialrichtung der elektrischen Maschine orientiert ist. Weil die Schwingung des Wickelkopfes eine Auslenkung der elektrischen Leiter in Radialrichtung bewirkt, kann somit die Schwingung des Wickelkopfes besonders effektiv gedämpft werden.

Bevorzugt ist eine Mehrzahl der Schwingungsdämpfer vorgesehen, die an jeder der Stirnseiten gleichmäßig in Umfangsrichtung der elektrischen Maschine verteilt angeordnet sind. Die elektrische Maschine ist bevorzugt ein elektrischer Generator und/oder ein elektrischer Motor.

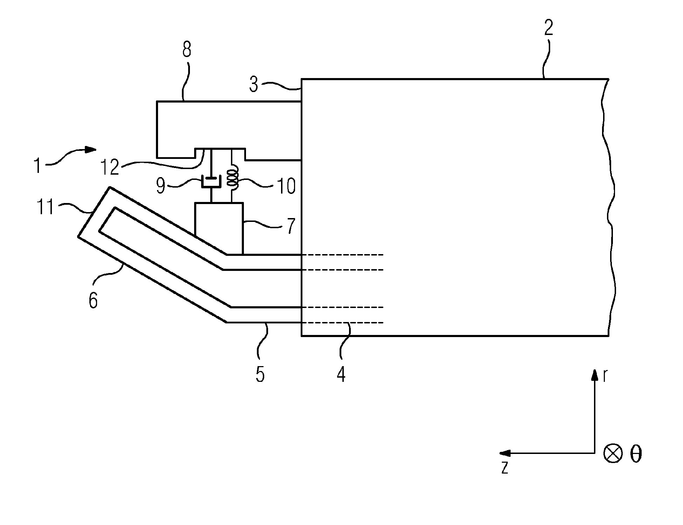

Im Folgenden wird anhand der beigefügten schematischen Zeichnung die Erfindung näher erläutert. Die Figur zeigt einen Längsschnitt durch eine elektrische Maschine.

Eine elektrische Maschine 1 weist einen Stator und einen Rotor auf, der um eine in einer Axialrichtung z orientierten Achse rotierbar ist. Der Stator weist dabei ein Blechpaket 2 auf, in das Aussparungen 4 eingebracht sind. Die elektrische Maschine 1 weist mindestens einen elektrischen Leiter 5 auf, der in die Aussparungen 4 eingebracht ist. Der elektrische Leiter 5 tritt an einer das Blechpaket 2 in Axialrichtung z der elektrischen Maschine begrenzenden Stirnseite 3 aus dem Blechpakets 2 heraus, weist außerhalb des Blechpakets 2 eine Kurve 11 auf und wird wieder in das Blechpaket 2 zurückgeführt. Die Gesamtheit aller sich außerhalb des Blechpakets 2 befindenden elektrischen Leiter 5 bildet einen Wickelkopf 6 der elektrischen Maschine 1. Dabei ist an beiden axialen Stirnseiten 3 der elektrischen Maschine 2 jeweils ein Wickelkopf 6 ausgebildet.

In der Figur nicht dargestellt ist, dass die elektrischen Leiter 5 von einer Isolation umhüllt sind, um die elektrischen Leiter 5 gegen das Blechpaket 2, gegen die Umgebung der elektrischen Maschine 1 und/oder gegen benachbarte Windungen der Wicklung elektrisch zu isolieren. Die elektrische Maschine 1 weist einen Stützring 7 auf, dessen Achse mit der Axialrichtung z der elektrischen Maschine 1 im Wesentlichen zusammenfällt und der den Wickelkopf 6 radial außen umgibt. Der Stützring 7 steht dabei entweder mit dem elektrischen Leiter 5 oder mit der Isolation in unmittelbarem Berührkontakt. Der Durchmesser des Stützrings kann dabei derart klein gewählt werden, dass er eine Versteifung des Wickelkopfs 6 bewirkt, um dessen Resonanzfrequenzen zu höheren Frequenzen zu verschieben.

Die elektrische Maschine 1 weist mindestens eine Stützkonsole 8 auf, die fest an der Stirnseite 3 des Blechpakets 2 angebracht ist. Die Stützkonsole 8 steht von dem Blechpaket 2 hervor und erstreckt sich in der Axialrichtung z der elektrischen Maschine 1. Weiterhin weist die Stützkonsole 8 an ihrer in der Radialrichtung r der elektrischen Maschine 1 innen liegenden Seite eine Mulde 12 auf.

Die elektrische Maschine 1 weist einen Schwingungsdämpfer 9 auf, der zwischen dem Stützring 7 und der Stützkonsole 8 angeordnet ist. Der Schwingungsdämpfer 9 ist in der Radialrichtung r außen an der Stützkonsole 8 und radial innen an dem Stützring 7 abgestützt. Der Schwingungsdämpfer 9 ist dabei von der Mulde 12 der Stützkonsole 8 aufgenommen. Es ist auch denkbar, dass der Stützring 7 an seiner radialen Außenseite eine Mulde aufweist, die den Schwingungsdämpfer 9 aufnimmt. In der Figur ist dargestellt, dass der Schwingungsdämpfer 9 den Wickelkopf 6 im Wesentlichen in der Mitte der axialen Erstreckung des Wickelkopfes 6 abstützt. Es ist ebenso denkbar den Schwingungsdämpfer 6 an dem radial außen liegenden Ende des Wickelkopfes 6 abzustützen, weil dort im Betrieb der elektrischen Maschine 1 die größte Schwingungsamplitude zu erwarten ist.

In der Figur ist weiterhin eine Feder 10 eingezeichnet, die an ihrem einen Ende an der Stützkonsole 8 und an ihrem anderen Ende an dem Stützring 7 angebracht ist. Dies veranschaulicht, dass es sich bei der elektrischen Maschine 1 mathematisch um ein Feder-Dämpfer-System handelt, wobei an der einen Seite der Feder 10 der Stützring 7 zusammen mit dem Wickelkopf 6 und an der anderen Seite der Feder die Stützkonsole 8 zusammen mit dem Blechpaket 2 angebracht sind.

Der Schwingungsdämpfer 9 weist einen Zylinder auf, dessen Zylinderachse im Wesentlichen in der Radialrichtung r orientiert ist. Der Schwingungsdämpfer 9 weist im Inneren des Zylinders eine Flüssigkeit auf. Der Schwingungsdämpfer 9 weist weiterhin einen Kolben auf, der im Inneren des Zylinders angeordnet ist und sich in Richtung der Zylinderachse bewegen kann. Die Dämpfungswirkung des Schwingungsdämpfers 9 wird insbesondere dadurch erzielt, dass der Kolben bei seiner Bewegung eine Reibung mit der Flüssigkeit erzeugt. Durch die Reibung wird die kinetische Energie des Kolbens in Wärmeenergie umgewandet. Die Reibung des Kolbens mit der Flüssigkeit ist dabei umso größer, je größer die Viskosität der Flüssigkeit ist. Der Schwingungsdämpfer 9 weist weiterhin im Inneren des Zylinders ein Gaspolster auf, welches komprimiert wird, wenn der Kolben tiefer in den Zylinder eindringt. Durch das Komprimieren des Gaspolsters wird ein weiterer Beitrag zur Schwingungsdämpfung geschaffen.

In einer bevorzugten Ausgestaltung der Erfindung ist die Flüssigkeit dabei eine magnetorheologische Flüssigkeit, dessen Viskosität umso höher ist, je stärker das an die Flüssigkeit angelegte Magnetfeld ist. Bei einem Ansteigen der magnetischen Feldstärke werden die auf die elektrischen Leiter 5 wirkenden Kräfte stärker, wodurch auch die auf den Schwingungsdämpfer 9 einwirkenden Kräfte stärker werden. Diese größer werdenden Kräfte werden jedoch durch die höhere Viskosität der Flüssigkeit kompensiert. Die magnetorheologische Flüssigkeit ist beispielsweise eine Suspension aus magnetisch polarisierbaren Partikeln, wie beispielsweise Eisenkugeln mit einem Durchmesser im Mikrometerbereich, und einer Trägerflüssigkeit, wie beispielsweise Öle, Ethylenglykol und/oder Wasser.

Es ist denkbar eine Mehrzahl an Schwingungsdämpfern 9 gleichmäßig in Umfangsrichtung θ der elektrischen Maschine 1 verteilt vorzusehen. Dabei können beispielsweise von sechs bis zwanzig Schwingungsdämpfer 9 an jeder Stirnseite 3 vorgesehen werden. Dabei ist es möglich, eine einzige ringförmige und in der Umfangsrichtung θ umlaufende Stützkonsole 8 vorzusehen oder es ist möglich, für jeden Schwingungsdämpfer 9 jeweils eine einzelne Stützkonsole 8 vorzusehen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine mit einem Blechpaket (2), einem elektrischen Leiter (5), der in Aussparungen (4) des Blechpakets (2) eingebracht ist und an der Stirnseite (3) des Blechpakets (2) aus dem Blechpaket (2) herausgeführt ist, wodurch der elektrische Leiter (2) außerhalb des Blechpakets (2) einen Wickelkopf (6) bildet, und mindestens einem eine Flüssigkeit aufweisenden hydraulischen Schwingungsdämpfer (9), der den Wickelkopf (6) an dem Blechpaket (2) abstützt, so dass Schwingungen des Wickelkopfes (6) im Betrieb der elektrischen Maschine (1) dämpfbar sind.

2. Elektrische Maschine gemäß Anspruch 1,
wobei die Flüssigkeit eine magnetorheologische Flüssigkeit ist.

3. Elektrische Maschine gemäß Anspruch 2,
wobei die magnetorheologische Flüssigkeit eine Suspension mit magnetisch polarisierbaren Partikeln und einer Trägerflüssigkeit aufweist.

4. Elektrische Maschine gemäß einem der Ansprüche 1 bis 3, wobei die elektrische Maschine (1) einen Stützring (7) aufweist, mittels dem der Wickelkopf (6) an dem Schwingungsdämpfer (9) abgestützt ist.

5. Elektrische Maschine gemäß Anspruch 4,
wobei der Stützring (7) den Wickelkopf (6) in Radialrichtung (r) der elektrischen Maschine (1) außen umschließt.

6. Elektrische Maschine gemäß einem der Ansprüche 1 bis 5, wobei die elektrische Maschine (1) mindestens eine an dem Blechpaket (2) angebrachte Stützkonsole (8) aufweist, mittels der der Schwingungsdämpfer (9) an dem Blechpaket (2) abgestützt ist.

7. Elektrische Maschine gemäß einem der Ansprüche 1 bis 6, wobei der Schwingungsdämpfer (9) einen in der Flüssigkeit bewegbaren Kolben aufweist, dessen Bewegungsrichtung in Radialrichtung (r) der elektrischen Maschine (1) orientiert ist.

8. Elektrische Maschine gemäß einem der Ansprüche 1 bis 7, wobei eine Mehrzahl der Schwingungsdämpfer (9) vorgesehen ist, die an jeder der Stirnseiten (3) gleichmäßig in Umfangsrichtung (θ) der elektrischen Maschine (1) verteilt angeordnet sind.

9. Elektrische Maschine gemäß einem der Ansprüche 1 bis 8, wobei die elektrische Maschine ein elektrischer Generator und/oder ein elektrischer Motor ist.
